# EUROPEAN PATENT APPLICATION

(11) **EP 1 356 953 A1**
(43) Date of publication of application: **29.10.2003**
(21) Application number: 03007971.9
(22) Date of filing: 09.04.2003
(51) Int. Cl.: B44C 1/17, B41M 5/00, B41M 5/035, B41M 5/40, D06P 5/00

(54) **Transfer sheets**

(30) Priority: 24.04.2002 JP 2002122368
(71) Applicant: Daicel Chemical Industries, Ltd., Osaka 590-8501 (JP)
(72) Inventor: Nakanishi, Hideki, Takaishi-shi, Osaka 592-0014 (JP)
(74) Representative: Grünecker, Kinkeldey, Stockmair & Schwanhäusser Anwaltssozietät

(57) **Abstract**

A phosphorescent transfer sheet comprises a support and a transfer layer separable from the support, wherein the transfer layer comprises a hot-melt adhesive particle and a phosphorescent pigment. The mean particle size of the hot-melt adhesive particle may be about 30 to 150 µm, and the mean particle size of the phosphorescent pigment may be 5 to 40 µm. The ratio of the mean particle size of the hot-melt adhesive particle relative to that of the phosphorescent pigment is about 1/1 to 10/1. The phosphorescent pigment may comprise a strontium-containing phosphorescent pigment. In the transfer sheet, a protecting layer separable from the support may be interposed between the support and the transfer layer. The phosphorescent transfer sheet ensures brightness of a clear or bright image in a dark place even after transferring.

## Description

### FIELD OF THE INVENTION

The present invention relates to a phosphorescent transfer sheet which is useful for forming a transfer image having visibility even in a dark place, wherein the transfer image is obtained by transferring a record image formed on the sheet with the use of an ink jet printer or other means onto an object (to be transferred) such as clothes.

### BACKGROUND OF THE INVENTION

A phosphorescent and luminescent material such as a phosphorescent pigment has been conventionally utilized for displaying visibility in a dark place. The phosphorescent and luminescent material gives off a light by absorbing a light energy from the sunlight or an interior light and emitting the light energy in a dark place, and displays visibility in a dark place. A method for introducing a phosphorescent and luminescent material to an object includes, for example, a method of forming a layer containing a phosphorescent and luminescent material on a support (such as a cloth, a ceramic, a wood, a resin and a metal), and a method of let a phosphorescent and luminescent material contained in a resin or the like. The above-mentioned method can be also used as a method for introducing the phosphorescent and luminescent material into a sheet such as a transfer sheet. However, in the case involving the phosphorescent and luminescent material in a resin, mechanical properties of the sheet are deteriorated because the phosphorescent and luminescent material has a large particle size of no less than several dozen µm.

Incidentally, in the case forming a layer containing a phosphorescent and luminescent material on a sheet, from the viewpoint of increasing an afterglow brightness (luminance) and an afterglow time as well as inhibiting a sedimentation of a pigment, a screen printing technology being capable of recoating and using a medium having a high viscosity has been utilized. However, the screen-printing technology is a complicated method because a screen plate must be produced for every image or many processing steps are needed.

Japanese Patent Application Laid-Open No. 355196/2000 (JP-2000-355196A) discloses a transfer paper comprising a separable sheet, a layer formed on the separable sheet and containing a phosphorescent and luminescent material, and a layer to be adhered formed on the layer containing the material. Also, the literature discloses a transferable matter and a printed matter comprising a support, a phosphorescent and luminescent layer and a record-receiving layer formed an image by an ink jet printer or a thermal-transfer printer, and in the transferable matter and the printed matter, the phosphorescent and luminescent layer and the record-receiving layer are so disposed on the support in that order as to partially or wholly overlap these layers. In the transfer paper, however, since the phosphorescent and luminescent material-containing layer covers a layer in which an image is formed, the image is deteriorated in color (brightness) after transferring. Moreover, water resistance cannot be maintained after transferring, and peeling (separation) or elution of the layer occurs due to washing or others in the case transferring the layer onto a fabric or a cloth.

### SUMMARY OF THE INVENTION

It is, therefore, an object of the present invention to provide a phosphorescent transfer sheet capable of exhibiting (showing) a clear (or distinct) or bright (or vivid) image in a dark place even after transferring, and a method for producing the same, as well as a method for transferring a record image with the use of the sheet.

It is another object of the present invention to provide a phosphorescent transfer sheet which is excellent in stability, particularly in water resistance of a transfer layer when the transfer layer is thermal-transferred onto an object (e.g., clothes), and a method for producing the same, as well as a method for transferring a record image with the use of the sheet.

It is still another object of the invention to provide a phosphorescent transfer sheet being excellent in thermal transferability and adhesiveness, and imparting high quality texture to an object (e.g., clothes) on which a transfer layer of the sheet is thermal-transferred, and a method for producing the same, as well as a method for transferring a record image with the use of the sheet.

The inventors of the present invention made intensive studies to achieve the above objects and finally found that a transfer sheet which comprises a support and a transfer layer being formed on the support and containing a hot-melt adhesive particle and a phosphorescent pigment ensures brightness of a clear (or distinct) or bright (or vivid) image in a dark place even after transferring. The present invention was accomplished based on the above findings.

That is, the transfer sheet of the present invention comprises a support and a transfer layer separable from the support, and the transfer layer comprises a hot-melt adhesive particle and a phosphorescent pigment. The transfer layer may be a porous layer. The mean particle size of the hot-melt adhesive particle may be about 30 to 150 µm (in particular about 40 to 80 µm), and the mean particle size of the phosphorescent pigment may be about 5 to 40 µm (in particular 7 to 35 µm). The ratio of the mean particle size of the hot-melt adhesive particle relative to that of the phosphorescent pigment [the hot-melt adhesive particle/the phosphorescent pigment] may be about 1/1 to 10/1 (in particular about 2/1 to 8/1). The transfer layer may be a layer formed at a heating temperature, and the hot-melt adhesive particle may comprise a particle (A) having a melting point of higher than the heating temperature and a particle (B) having a melting point of not higher than the heating temperature. The hot-melt adhesive particle may comprise a polyamide-series resin particle. The phosphorescent pigment may comprise a base crystal and an activator. The phosphorescent pigment may comprise a base crystal represented by the following composition formula (1):

MAl₂O₄ (1)

wherein M represents at least one member selected from the group consisting of metal atoms of the Group 2A of the Periodic Table of Elements.

The transfer layer may further comprise a film-formable resin component. The film-formable resin component may comprise at least one member selected from the group consisting of a hydrophilic polymer, a urethane-series resin, and a thermosetting or a crosslinkable (crosslinking) resin. Moreover, the transfer layer may further comprise a dye fixing agent. In the transfer sheet, a protecting layer separable from the support may be interposed between the support and the transfer layer. The transfer sheet may comprise about 150 to 3000 parts by weight (in particular about 200 to 1000 parts by weight) of the hot-melt adhesive particle and about 10 to 1000 parts by weight (in particular about 20 to 500 parts by weight) of the phosphorescent pigment relative to 100 parts by weight of the film-formable resin component. The ratio (weight ratio) of the hot-melt adhesive particle relative to the phosphorescent pigment may be about 99/1 to 30/70.

The present invention includes a method for producing a transfer sheet, which comprises forming directly or indirectly a transfer layer comprising a hot-melt adhesive particle and a phosphorescent pigment on a release surface of a support to give the transfer sheet. Moreover, the present invention includes a method for producing a transfer sheet, which comprises forming a protecting layer on a release surface of a support followed by forming a transfer layer comprising a hot-melt adhesive particle and a phosphorescent pigment on the protecting layer to give the transfer sheet.

The present invention also includes a method for transferring or forming a record image onto an object, which comprises recording an image onto the transfer layer of the transfer sheet by means of an ink jet recording system, heating the transfer layer with contacting with the object, and separating the transfer layer from a support for transferring or forming the record image onto the object. Moreover, the present invention includes a fabric or clothes, on which a record image is formed by the above-mentioned method.

The present invention also includes use of the transfer sheet for transferring or forming a record image onto an object.

### DETAILED DESCRIPTION OF THE INVENTION

The transfer sheet of the present invention comprises a support and a transfer layer separable from the support, and the transfer layer comprises a hot-melt adhesive particle and a phosphorescent pigment.

### [Support]

As a support (or a substrate), any of supports such as opaque, semitransparent and transparent supports can be used as far as the support is capable of separating from a transfer layer (or a protecting layer). Examples of the support usually include a release (releasable) support, for example, a release-treated paper (a release paper); and a synthetic paper, a chemical (artificial) fiber paper and a plastic film, each of them may be treated for providing releasability.

As the synthetic paper, there may be mentioned a variety of synthetic papers such as a paper made from a polypropylene and a polystyrene.

As the chemical fiber paper, there may be mentioned a variety of chemical fiber papers made from a chemical fiber such as a nylon fiber, an acrylic fiber, a polyester fiber and a polypropylene fiber.

As a polymer constituting the plastic film, a variety of resins (a thermoplastic resin and a thermosetting resin) can be used, and a thermoplastic resin is usually employed. As the thermoplastic resin, there may be mentioned a polyolefin-series (polyolefinic) resin (e.g., a polyC₂₋₄olefin-series resin such as a polypropylene), a cellulose derivative (e.g., a cellulose ester such as a cellulose acetate), a polyester-series resin (e.g., a polyalkylene terephthalate such as a polyethylene terephthalate and a polybutylene terephthalate, a polyalkylene naphthalate such as a polyethylene naphthalate and a polybutylene naphthalate, or a copolyester thereof), a polyamide-series resin (e.g., a polyamide 6, a polyamide 6/6), a vinyl alcohol-series resin (e.g., a polyvinyl alcohol, an ethylene-vinyl alcohol copolymer), a polycarbonate, and the like. Among these films, the polypropylene, the polyester-series resin, the polyamide-series resin or the like is usually employed. In particular, the polyester (especially, a polyethylene terephthalate) is preferred from the viewpoints of mechanical strength, heat resistance and workability.

The thickness of the support can be selected depending on its purpose or application, and is usually, for example, about 10 to 250 µm, and preferably about 15 to 200 µm.

The releasability can be provided or imparted by a conventional method, for example, by treating the support with a releasing agent (e.g., a wax, a salt of a higher fatty acid, an ester of a higher fatty acid, an amide of a higher fatty acid, a silicone oil) or by containing the releasing agent in the support. In the case of the paper, the releasability can be imparted by coating the paper with a releasing agent (e.g., a silicone oil) after anchor treatment (e.g., clay-coat). If necessary, to the plastic film may be added a conventional additive such as a stabilizer (e.g., an antioxidant, an ultraviolet ray absorber, a thermal stabilizer), a lubricant, a nucleation agent, a filler and a pigment.

### [Transfer layer]

In the transfer sheet of the present invention, the transfer layer comprises a hot-melt adhesive particle and a phosphorescent pigment, and may further comprise a film-formable resin component or a dye fixing agent.

### (Hot-melt adhesive particle)

In the present invention, combination use of a hot-melt adhesive particle with a phosphorescent pigment realizes an excellent ink-absorption property in a phosphorescent sheet, and ensures a formation of a high quality transfer image. A resin for the hot-melt adhesive particle is not particularly limited as far as the resin has thermal-adhesiveness. For example, the hot-melt adhesive resin includes a polyamide-series resin, a thermoplastic polyurethane-series resin, a polyester-series resin, an olefinic resin, and others.

### (1) Polyamide-series resin

As the thermal-adhesive polyamide-series resin, there may be mentioned a nylon 6, a nylon 46, a nylon 66, a nylon 610 , a nylon 612, a nylon 11, a nylon 12, a polyamide resin formed by reacting a dimer acid with a diamine, a polyamide-series elastomer (e.g., a polyamide having a polyoxyalkylene diamine as a soft segment), and the like. The polyamide-series resin may be used singly or in combination. Among them, the preferred polyamide-series resin includes a nylon having at least one unit selected from units constituting a nylon 11 and a nylon 12 (e.g., a homopolyamide such as a nylon 11 and a nylon 12, a copolyamide such as a nylon 6/11, a nylon 6/12, a nylon 66/12, and a copolymer of a dimer acid, a diamine and a laumlactam or an aminoundecanoic acid), a polyamide resin formed by reacting a dimer acid and a diamine.

### (2) Thermoplastic polyurethane-series resin

Exemplified as the thermoplastic polyurethane-series resin is, for example, a thermoplastic resin or thermoplastic elastomer obtained by reacting of a diisocyanate component with a diol component.

As the diisocyanate component, there may be mentioned an aromatic diisocyanate (e.g., phenylene diisocyanate, tolylene diisocyanate, etc.), an araliphatic diisocyanate (e.g., xylylene diisocyanate, etc.), an alicyclic diisocyanate (e.g., isophorone diisocyanate, etc.), an aliphatic diisocyanate (e.g., 1,6-hexamethylene diisocyanate, lysine diisocyanate, etc.), and the like. Adducts of a diisocyanate compound may be used as the diisocyanate component. If necessary, a polyisocyanate component such as triphenylmethane triisocyanate may be used in combination. The diisocyanate component may be used singly or in combination.

As examples of the diol component, there may be mentioned a polyester diol, a polyether diol (a polytetramethylene ether glycol, etc.), and the like. The diol component may be used singly or in combination.

The polyester diol may not be limited to a polyester diol obtained by reacting a diol with a dicarboxylic acid or a reactive derivative thereof (e.g., a lower alkyl ester, an acid anhydride), but be a polyester diol derived from a lactone. As examples of the diol, there may be mentioned an aliphatic diol (e.g., a C₂₋₁₀alkylene diol such as ethylene glycol, trimethylene glycol, propylene glycol, 1,3-butanediol, 1,4-butanediol, hexamethylene glycol, neopentyl glycol; a polyoxyC₂₋₄alkylene glycol such as diethylene glycol, triethylene glycol), an alicyclic diol, an aromatic diol, and the like. The diol may be used singly or in combination. If necessary, a polyol such as trimethylol propane and pentaerythritol may be used in combination with the above diol(s). As examples of the dicarboxylic acid, there may be mentioned an aliphatic dicarboxylic acid (e.g., a C₄₋₁₄ aliphatic dicarboxylic acid such as adipic acid, suberic acid, azelaic acid, sebacic acid, dodecanedicarboxylic acid, etc.), an alicyclic dicarboxylic acid, an aromatic dicarboxylic acid (e.g., phthalic acid, terephthalic acid, isophthalic acid, etc.), and the like. The dicarboxylic acid may be used singly or in combination. If necessary, a polycarboxylic acid such as trimellitic acid may be used in combination with the dicarboxylic acid. As examples of the lactone, there may be mentioned butyrolactone, valerolactone, caprolactone, laurolactone, etc. The lactone may be used singly or in combination.

The thermoplastic polyurethane-series resin may be used singly or in combination.

Among the thermoplastic polyurethane-series resins, a polyester-based urethane-series resin obtained with the use of at least a polyester diol as a diol component, especially a polyester-based urethane-series resin obtained with the use of a diol component containing not less than 50 % by weight (e.g., not less than 75 % by weight) of an aliphatic polyester diol, is preferred. Moreover, if necessary, a urethane-series resin may be a thermoplastic elastomer obtained with the use of a diamine component as a chain-extending agent. As the thermoplastic urethane-series elastomer, for example, there may be mentioned an elastomer containing an aliphatic polyether or polyester as a soft segment and a polyurethane unit of a short-chained glycol as a hard segment.

### (3) Polyester-series resin

The thermal-adhesive polyester-series resin includes a homopolyester or copolyester resin and a polyester-series elastomer, which employ at least an aliphatic diol or an aliphatic dicarboxylic acid.

The homopolyester resin includes, for example, a saturated aliphatic polyester resin formed by reacting an aliphatic diol (e.g., a C₂₋₁₀alkylene diol, a polyoxyC₂₋₄ alkylene glycol, which are described in the section on the polyurethane-series resin), an aliphatic dicarboxylic acid (e.g., the above-mentioned C₄₋₁₄aliphatic dicarboxylic acid), and if necessary, a lactone.

The copolyester resin includes a saturated polyester resin obtained by substituting a part of components (a diol and/or a terephthalic acid) constituting a polyethylene terephthalate or a polybutylene terephthalate with other diols (a C₂₋₆ alkylene glycol such as ethylene glycol, propylene glycol and 1,4-butanediol, a polyoxyalkylene glycol such as diethylene glycol and triethylene glycol, cyclohexanedimethanol, etc.) or other dicarboxylic acids (the above aliphatic dicarboxylic acid, an asymmetric aromatic dicarboxylic acid such as phthalic acid and isophthalic acid, etc.), or a lactone (butyrolactone, valerolactone, caprolactone, laurolactone, etc.).

The polyester-series elastomer includes an elastomer having a C₂₋₄alkylene arylate (ethylene terephthalate, butylene terephthalate, etc.) as a hard segment and a (poly)oxyalkylene glycol and the like as a soft segment.

As the polyester-series resin, there may be employed a polyester resin having a urethane bond, for example, a resin in which its molecular weight is increased with the use of the diisocyanate.

The polyester-series resin may be used singly or in combination.

### (4) Olefinic resin

The thermal-adhesive olefinic resin includes, for example, a homopolymer or copolymer of an α-olefin such as ethylene, propylene, 1-butene, 3-methyl-1-pentene, 4-methyl-1-butene, 1-hexene, 1-octene, and the like (in particular, an α-C₂₋₁₀ olefin), and an olefinic elastomer.

Exemplified as the homopolymer or copolymer of the α-olefin is a polyolefin (a polyethylene such as a low-density polyethylene and a linear low-density polyethylene, an ethylene-propylene copolymer, an atactic polypropylene, etc), a modified polyolefin [an ethylene-butene-1 copolymer, an ethylene-(4-methylpentene-1) copolymer, an ethylene-vinyl acetate copolymer, an ethylene-(meth)acrylic acid copolymer or an ionomer thereof, an ethylene-(meth)acrylate copolymer such as an ethylene-ethyl acrylate copolymer, a propylene-butene-1 copolymer, an ethylene-propylene-butene-1 copolymer, a maleic anhydride graft polypropylene, etc.], and the like. The olefinic elastomer includes an elastomer comprising a polyethylene or a polypropylene as a hard segment and an ethylene-propylene rubber (EPR) or an ethylene-propylene diene rubber (EPDM) as a soft segment.

The olefinic resin may be used singly or in combination. Among the olefinic resins, a modified polyolefin is preferred from the viewpoint of thermal-adhesiveness.

The hot-melt adhesive resin may be used singly or in combination. The hot-melt adhesive resin is usually water-insoluble. The hot-melt adhesive resin may be a reactive hot-melt adhesive resin having a reactive group (e.g., a carboxyl group, a hydroxyl group, an amino group, an isocyanate group, and a silyl group) at a terminal position. The softening point of the hot-melt adhesive resin is preferably about 70 to 180°C (in particular, about 100 to 150°C).

Among the hot-melt adhesive resins, the polyamide-series resin, the thermoplastic urethane-series resin and the polyester-series resin are preferred. When the object is fabrics (or cloth) such as clothes, the polyamide-series resins and the thermoplastic urethane-series resins (e.g., the polyamide-series resin) are particularly preferred in terms of thermal-transferability, durability of the transfer image (e.g., washing resistance, water resistance) and texture.

The mean particle size of the hot-melt adhesive particle is, for example, about 10 to 200 µm, preferably about 30 to 150 µm, and more preferably about 40 to 120 µm (in particular, about 50 to 110 µm).

Further, the hot-melt adhesive particle preferably comprises a hot-melt adhesive particle (A) having a melting point of higher than the heating temperature of the transfer layer, and a hot-melt adhesive particle (B) having a melting point of not higher than the heating temperature. The heating temperature of the transfer layer is usually a temperature for drying the transfer layer coated on the sheet to form a film (e.g., about 70 to 90°C).

### (A) Hot-melt adhesive particle

The hot-melt adhesive particle (A) imparts high ink-absorption property mainly to the transfer layer, and also imparts high hot-melt adhesiveness to the transfer layer.

The melting point of the hot-melt adhesive particle (A) need only be higher than the heating temperature. The melting point is, for example, about 85 to 200°C, preferably about 90 to 170°C (e.g., about 90 to 150°C), and more preferably about 90 to 120°C (particularly about 100 to 120°C) depending on the heating temperature. Since the melting point of the hot-melt adhesive particle (A) is higher than the heating temperature, the particle (A) remains a particle form without melting in a production step of the transfer layer. Accordingly, the particle (A) makes the sheet surface uneven.

In order to give the transfer layer effective hot-melt adhesiveness by protruding the hot-melt adhesive particle (A) from the transfer layer surface, the hot-melt adhesive particle may comprise a particulate or powdery resin having a larger mean particle size than the thickness of the transfer layer. The mean particle size of the particle is, for example, about 10 to 200 µm, preferably about 30 to 100 µm, and more preferably about 40 to 80 µm (in particular about 50 to 70 µm).

Moreover, the hot-melt adhesive particle (A) may comprise a hot-melt adhesive particle (A1) having an oil absorption of not less than 50 ml/100g and a hot-melt adhesive particle (A2) having an oil absorption of less than 50 ml/100g.

The oil absorption of the hot-melt adhesive particle (A1) is not less than 50 ml/100g (e.g., about 70 to 500 ml/100g), and preferably not less than 75 ml/100g (e.g., about 100 to 300 ml/100g). Incidentally, the oil absorption is a value measured by use of linseed oil in accordance with JIS K 5107.

Moreover, the specific surface area of the hot-melt adhesive particle (A1) is about 5 to 100 m²/g (e.g., about 10 to 50 m²/g), and preferably about 10 to 40 m²/g.

A hot-melt adhesive particle (A1) which satisfies such properties is a porous hot-melt adhesive particle.

The oil absorption of the hot-melt adhesive particle (A2) is less than 50 ml/100g, preferably not more than 48 ml/100g, and more preferably not more than 47 ml/100g (e.g., about 10 to 47 ml/100g).

The ratio (weight ratio) of the hot-melt adhesive particle (A1) relative to the hot-melt adhesive particle (A2) [(A1)/(A2)] is about 80/20 to 1/99, preferably about 60/40 to 5/95, and more preferably about 40/60 to 10/90 (in particular, about 30/70 to 15/85).

### (B) Hot-melt adhesive particle

The hot-melt adhesive particle (B) prevents the hot-melt adhesive particle (A) from coming off the transfer layer, increases running stability at the inside of the printer, and imparts hot-melt adhesiveness.

The hot-melt adhesive particle (B) need only have a melting, point of not higher than the heating temperature and be capable of melting at the heating temperature. The melting point of the hot-melt adhesive particle (B) is, for example, about 40 to 80°C, preferably about 50 to 80°C, and more preferably about 60 to 80°C depending on the heating temperature. The hot-melt adhesive particle (B) has a melting point of not higher than the heating temperature so that the hot-melt adhesive particle (B) allows to stably keep the hot-melt adhesive particle (A) on the transfer layer, probably because the hot-melt adhesive particle (B) is melted in the production step of the transfer layer and participates in forming of the layer.

There is no particular restriction as to the mean particle size of the hot-melt adhesive particle (B). The mean particle size of the hot-melt particle (B) can be suitably selected from the range of about 1 to 300 µm, and is usually about 1 to 200 µm, preferably about 30 to 100 µm, and more preferably about 40 to 80 µm similar to that of the hot-melt adhesive particle (A).

The difference between the melting point of the hot-melt adhesive particle (A) and that of the hot-melt adhesive particle (B) is not less than 5°C (for example, about 5 to 100°C), preferably not less than 10°C (for example, about 10 to 70°C), more preferably about 20 to 70°C (for example, about 20 to 50°C), and particularly 30 to 70°C (for example, abut 30 to 50°C).

The ratio (weight ratio) of the hot-melt adhesive particle (A) relative to the hot-melt adhesive particle (B) [the former/the latter] is about 99.5/0.5 to 50/50, preferably about 99/1 to 70/30, and more preferably about 99/1 to 80/20 (in particular, about 95/5 to 80/20).

The amount of the hot-melt adhesive particle may be selected within the range of about 10 to 5000 parts by weight on solid basis relative to 100 parts by weight of the film-formable resin component. In order to impart porosity to the transfer layer, the amount of the hot-melt adhesive particle is preferably more than that of the film-formable resin component. For example, the amount of the hot-melt adhesive particle is about 150 to 3000 parts by weight, preferably about 200 to 1000 parts by weight, and more preferably about 300 to 1000 parts by weight relative to 100 parts by weight of the film-formable resin component.

Thus, the porosity of the transfer layer can be enhanced by increasing the amount of the hot-melt adhesive particle relative to the film-formable resin component. When the transfer layer is a porous layer, ink-absorption property of the transfer layer is improved, and the transfer layer shrinks after thermal transferring so that clearness and brightness of the resulting image are improved.

### (Phosphorescent pigment)

The phosphorescent pigment is a solid material that emits a light by storing an energy obtained from the irradiation of the sunlight, an electric light, an ultraviolet ray or the like, and converting the energy into a light in a dark place. The phosphorescent pigment includes a base crystal containing an inorganic oxide or others, and a slight amount of an activator used as a luminescence center (e.g., about 0.002 to 20 mol% relative to metal atoms constituting the base crystal). For example, the phosphorescent pigment represented by the expression "ZnS:Cu (green)" means a pigment which contains a base crystal comprising ZnS, and Cu as an activator, and emits a green light.

As the phosphorescent pigment, concretely, there may be exemplified an oxide-series phosphorescent pigment [e.g., SrAl₂O₄:Eu,Dy (yellowish green), Sr₄Al₁₄O₂₅:Eu,Dy (cyan), CaAl₂O₄:Eu,Dy (purple), ZnO:Zn (whitish green), Y₂O₃:Eu (red), Al₂O₃:Cr (red)], an oxide sulfide-series phosphorescent pigment [e.g., Y₂O₂S:Eu (red), Gd₂O₂S:Tb (yellowish green)], a sulfide-series phosphorescent pigment [e.g., ZnS:Cu (green), ZnS:CaS:Bi (violet-blue emission), ZnS:Mn (orange), ZnS:Ag (blue), ZnCdS:Cu (yellow to orange emission), CaSrS:Bi (blue)], a halide-series phosphorescent pigment [e.g., BaF(Cl,Br):Eu (blue)], a silicate-series phosphorescent pigment [Zn₂SiO₄:Mn (green)], a phosphate-series phosphorescent pigment [e.g., Ca₅(PO₄)₃(Cl,F)], and others.

Among these phosphorescent pigments, from the viewpoint of the duration of light emission, the phosphorescent pigment preferably comprises a base crystal represented by the following composition formula (1):

MAl₂O₄ (1)

wherein M represents at least one member selected from the group consisting of metal atoms of the Group 2A of the Periodic Table of Elements.

The metal atom of the Group 2A of the Periodic Table of Elements includes, fore example, calcium, strontium, barium, and others. As the activator to the base crystal, for example, there may be mentioned a lanthanoid metal atom such as europium (Eu), cerium (Ce), praseodymium (Pr), neodymium (Nd), samarium (Sm), terbium (Tb), dysprosium (Dy), holmium (Ho), erbium (Er), thulium (Tm), ytterbium (Yb), and lutetium (Lu). Among these activators, it is preferred that europium is used as the activator and other lanthanoid metal atom is used as a co-activator. As such a phosphorescent pigment, for example, there may be mentioned a calcium-containing phosphorescent pigment (e.g., CaAl₂O₄:Eu,Nd ; CaAl₂O₄:Eu,Sm ; CaAl₂O₄:Eu,Tm ; CaAl₂O₄:Eu,Nd,La ; CaAl₂O₄:Eu,Nd,Gd ; CaAl₂O₄:Eu,Nd,Dy ; CaAl₂O₄:Eu,Nd,Ho ; CaAl₂O₄:Eu,Nd,Er), a strontium-containing phosphorescent pigment (e.g., SrAl₂O₄:Eu ; SrAl₂O₄:Eu,Dy ; SrAl₂O₄:Eu,Nd ; SrAl₂O₄:Eu,Mn ; SrAl₂O₄:Eu,Sn ; SrAl₂O₄:Eu,Bi), a barium-containing phosphorescent pigment (e.g., BaAl₂O₄:Eu,Nd), and others. Among them, the strontium-containing phosphorescent pigment (e.g., SrAl₂O₄:Eu,Dy) is preferred.

The phosphorescent pigment may be used singly or in combination.

The mean particle size of the phosphorescent pigment is about 3 to 50 µm, preferably about 5 to 40 µm, and more preferably about 7 to 35 µm (particularly about 10 to 30 µm).

The ratio of the mean particle size of the hot-melt adhesive particle relative to that of the phosphorescent pigment [the former/the latter] is about 1/2 to 20/1, preferably about 1/1 to 10/1, and more preferably about 2/1 to 8/1 (particularly about 3/1 to 7/1). In the case where the ratio between both mean particle sizes is within such a range, the balance between image brightness through the phosphorescent pigment and thermal transferability through the hot-melt adhesive particle becomes better.

The ratio (weight ratio) of the hot-melt adhesive particle relative to the phosphorescent pigment [the hot-melt adhesive particle/the phosphorescent pigment] is about 99/1 to 30/70, preferably about 97/3 to 40/60, and more preferably about 95/5 to 50/50.

The amount of the phosphorescent pigment is, on solid basis, about 10 to 2000 parts by weight, more preferably about 10 to 1000 parts by weight, and more preferably about 20 to 500 parts by weight relative to 100 parts by weight of the film-formable resin component.

### (Film-formable resin component)

The film-formable resin component is not particularly limited as far as it has the film-formable properties, a variety of thermoplastic resins (e.g., a polyamide-series resin, a polyester-series resin, a styrenic resin, an polyolefinic resin, a cellulose derivative, a polycarbonate-series resin, a polyvinyl acetate-series resin, an acrylic resin, a vinyl chloride-series resin, a thermoplastic urethane-series resin) and thermosetting resins can be used. Among the film-formable resin components, at least one selected from the group consisting of a hydrophilic polymer, a urethane-series resin, and a thermosetting or a crosslinkable (crosslinking) resin is preferred. The film-formable resin component may be used singly or in combination.

### (1) Hydrophilic polymer

The transfer layer may contain a hydrophilic polymer in order to make an ink-retainability better.

The hydrophilic polymer includes a variety of polymers having an affinity for water, for example, a water-soluble polymer, a water-dispersible polymer, and a polymer which is water-insoluble and has water-absorbing.

As the hydrophilic polymer, there may be mentioned, for example, a polyoxyalkylene glycol-series resin (e.g., a polyoxyC₂₋₄alkylene glycol such as a polyethylene glycol, a polypropylene glycol, an ethylene oxide-propylene oxide block copolymer, and a polytetramethylene ether glycol), an acrylic polymer [e.g., a poly(meth)acrylic acid or a salt thereof, a methyl methacrylate-(meth)acrylic acid copolymer, an acrylic acid-polyvinyl alcohol copolymer], a vinyl ether-series polymer (e.g., a polyvinyl alkyl ether such as a polyvinyl methyl ether and a polyvinyl isobutyl ether, a C₁₋₆alkyl vinyl ether-maleic anhydride copolymer), a styrenic polymer [e.g., a styrene-maleic anhydride copolymer, a styrene-(meth)acrylic acid copolymer, a polystyrenesulfonic acid or a salt thereof], a vinyl acetate-series polymer [e.g., a vinyl acetate-(meth)acrylic acid copolymer, a vinyl acetate-methyl acrylate copolymer], a vinyl alcohol-series polymer (e.g., a polyvinyl alcohol, a modified polyvinyl alcohol, an ethylene-vinyl alcohol copolymer), a cellulose derivative (e.g., a cellulose ether such as methyl cellulose, ethyl cellulose, hydroxyethyl cellulose and carboxymethyl cellulose, a cellulose ester such as cellulose acetate), a hydrophilic natural polymer or a derivative thereof (e.g., an alginic acid or a salt thereof, a gum arabic, a gelatin, a casein, a dextrin), a nitrogen-containing polymer (or a cationic polymer) or a salt thereof [e.g., a quaternary ammonium salt such as a polyvinylbenzyltrimethylannmonium chloride, and a polydiallyldimethylammonium chloride, a polydimethylaminoethyl (meth)acrylate hydrochloride, a polyvinylpyridine, a polyethylene imine, a polyacryl amide, a polyvinyl pyrrolidone], and the like. The salt of the hydrophilic polymer (in particular, a salt of a carboxyl group or a sulfonic acid group) includes an ammonium salt, an amine salt, and an alkali metal salt such as sodium salt, and others. The hydrophilic polymer may be used singly or in combination.

Among the hydrophilic polymers, a hydroxyl group-containing hydrophilic polymer [for example, a polyoxyalkylene glycol-series resin, a vinyl alcohol-series polymer (a polyvinyl alcohol, a modified polyvinyl alcohol), a cellulose derivative (e.g., hydroxyethylcellulose)], a carboxyl group-containing hydrophilic polymer (e.g., an acrylic polymer), a nitrogen-containing polymer (e.g., a cationic polymer, a polyvinylpyrrolidone), in particular, a polyoxyalkylene glycol-series resin are preferred. As the polyoxyalkylene glycol-series resin, a polyoxyalkylene glycol-series resin having an oxyethylene unit is preferred, and for example, there may be mentioned a polyethylene glycol (homopolymer), or a copolymer of ethylene oxide and at least one member selected from the group consisting of a C₃₋₄ alkylene oxide, a hydroxyl group-containing compound (e.g., a polyhydric alcohol such as glycerin, trimethylolpropane, trimethylolethane and bisphenol A), a carboxyl group-containing compound (e.g., a C₂₋₄carboxylic acid such as acetic acid, propionic acid, butyric acid) and an amino group-containing compound (e.g., an amine, an ethanolamine). The weight-average molecular weight of the hydrophilic polymer is about 100 to 50,000, preferably about 500 to 10,000, and more preferably about 1,000 to 5,000.

### (2) Urethane-series resin

The transfer layer may further contain a urethane-series resin for high quality texture (softness).

The urethane-series resin comprises, for example, a urethane-series polymer obtained by reacting a diisocyanate component with a diol component, and if necessary, a diamine component may be used as a chain-extending agent.

As the diisocyanate component, there may be mentioned an aromatic diisocyanate (e.g., phenylene diisocyanate, tolylene diisocyanate, diphenylmethane-4,4'-diisocyanate), an araliphatic diisocyanate (e.g., xylylene diisocyanate), an alicyclic diisocyanate (e.g., isophorone diisocyanate), an aliphatic diisocyanate (e.g., 1,6-hexamethylene diisocyanate, lysine diisocyanate). An adduct of a diisocyanate compound may be used as the diisocyanate component. If necessary, a polyisocyanate component such as triphenylmethane triisocyanate may be used in combination. The diisocyanate component may be used singly or in combination.

As examples of the diol component, there may be mentioned a polyester diol, a polyether diol, a polycarbonate diol, and others. The diol component may be used singly or in combination.

The polyester diol may be a polyester diol derived from a lactone, not being limited to a polyester diol obtained by reacting a diol with a dicarboxylic acid or a reactive derivative thereof (e.g., a lower alkyl ester, an acid anhydride). As examples of the diol, there may be mentioned an aliphatic diol (e.g., a C₂₋₁₀alkylene diol such as ethylene glycol, trimethylene glycol, propylene glycol, 1,3-butanediol, 1,4-butanediol, hexamethylene glycol and neopentyl glycol; a polyoxyC₂₋₄alkylene glycol such as diethylene glycol and triethylene glycol), an alicyclic diol and an aromatic diol. The diol may be used singly or in combination. If necessary, a polyol such as trimethylol propane and pentaerythritol may be used in combination with the above diol. The diol is usually an aliphatic diol.

As examples of the dicarboxylic acid, there may be mentioned an aliphatic dicarboxylic acid (e.g., a C₄₋₁₄aliphatic dicarboxylic acid such as adipic acid, suberic acid, azelaic acid, sebacic acid, dodecanedicarboxylic acid), an alicyclic dicarboxylic acid, an aromatic dicarboxylic acid (e.g., phthalic acid, terephthalic acid, isophthalic acid). The dicarboxylic acid may be used singly or in combination. If necessary, a polycarboxylic acid such as trimellitic acid and pyromellitic acid may be used in combination with the dicarboxylic acid.

As examples of the lactone, there may be mentioned butyrolactone, valerolactone, caprolactone and laurolactone. The lactone may be used singly or in combination.

The urethane-series resin may be a polyether-based urethane-series resin obtained with the use of a polyether diol (e.g., a polyoxytetramethyleneglycol) as a diol component, and a polyester-based urethane-series resin obtained with the use of at least a polyester diol (in particular, an aliphatic polyester diol obtained with use of an aliphatic component as a main reaction component) is preferred, and the polyester-based urethane-series resin includes, for example, a urethane resin obtained by reacting a diisocyanate such as isophorone diisocyanate with a polyester diol, which is obtained by reacting a C₂₋₆alkylene diol such as 1,4-butandiol, with a C₄₋ ₁₂aliphatic dicarboxylic acid such as adipic acid and isophthalic acid or phthalic acid; or a polyester diol which is derived from the above lactone.

It is preferred that the urethane-series resin is used as an organic solvent solution, an aqueous solution, an aqueous emulsion. The aqueous solution or the aqueous emulsion of the urethane-series resin may be prepared by dissolving or emulsion-dispersing a urethane-series resin with the use of an emulsifying agent, or by introducing an ionic functional group such as a free carboxyl group and a tertiary amino group into a molecule of a urethane-series resin and dissolving or dispersing the urethane-series resin with the use of an alkali or an acid. Such a urethane-series resin in which a free carboxyl group or a tertiary amino group is introduced into its molecule comprises a urethane-series resin obtained by reacting a diisocyanate component with a diol component having a free carboxyl group or a tertiary amino group (in particular, a polymeric diol component). Incidentally, the diol having a free carboxyl group (in particular, a polymeric diol) can, for example, be obtained by a process which comprises reacting a diol component with a polycarboxylic acid or an anhydride thereof having three or more carboxyl groups (e.g., a tetrabasic or tetracarboxylic acid anhydride such as pyromellitic acid anhydride) or a polycarboxylic acid having a sulfonic acid group (e.g., sulfoisophthalic acid), or a process which comprises ring-opening-polymerizing a lactone with the use of dimethylol propionic acid as an initiator. Moreover, the diol having a tertiary amino group (especially, a polymeric diol) can be prepared by ring-opening-polymerizing an alkyleneoxide or a lactone with the use of N-methyldiethanolamine or the like as an initiator. The tertiary amino group may form a quaternary ammonium salt. Such a urethane-series polymer into which a tertiary amino group or a quaternary ammonium salt is introduced [a cation-type urethane-series resin (cationic urethane-series resin)] is commercially available as, for example, F-8559D (manufactured by Dai-ichi Kogyo Seiyaku Co., Ltd.) and PERMARIN UC-20 (manufactured by Sanyo Chemical Industries, Ltd.). The urethane-series resin may be used singly or in combination.

### (3) Thermosetting resin or crosslinkable resin

The thermosetting resin or a crosslinkable resin may be, for example, a phenolic resin, an alkyd resin, an unsaturated polyester resin, an epoxy-series resin, a vinyl ester-series resin, a silicone-series resin or the like, and a self-crosslinkable (self-crosslinking) resin (a thermoplastic resin having a self-crosslinking group), for example, a self-crosslinking polyester-series resin, a self-crosslinking polyamide-series resin, a self-crosslinking acrylic resin, a self-crosslinking olefinic resin and the like are preferred. Among them, a self-crosslinking acrylic resin (e.g., an acrylic silicone resin) is particularly preferred.

The self-crosslinkable (self-crosslinking) resin comprises a polymer composed of a monomer having at least a self-crosslinking group [e.g., an epoxy group, a methylol group, a hydrolyzed condensate group (e.g., silyl group), an aziridinyl group] as a constituting unit.

The monomer having a self-crosslinking group (i.e., a monomer containing a crosslinking functional group) includes a variety of monomers, for example, an epoxy group-containing monomer [e.g., glycidyl (meth)acrylate, (meth)allyl glycidyl ether, 1-allyloxy-3,4-epoxybutane, 1-(3-butenyloxy)-2,3-epoxypropane, 4-vinyl-1-cyclohexene-1,2-epoxide], a methylol group-containing monomer or a derivative thereof [e.g., an N-C₁₋₄alkoxymethyl (meth)acrylamide such as N-methylol (meth)acrylamide, and N-methoxymethyl (meth)acrylamide, N-butylol (meth)acrylamide], a monomer containing a hydrolyzed condensate group such as silyl group [e.g., vinyltrimethoxysilane, vinyltriethoxysilane, vinyltributoxysilane, vinylmethoxydimethylsilane, vinylethoxydimethylsilane, vinylisobutoxydimethylsilane, vinyldimethoxymethylsilane, vinyldiethoxymethylsilane, vinyltris(2-methoxyethoxy)silane, vinyldiphenylethoxysilane, vinyltriphenoxysilane, 3-(vinylphenylaminopropyl)trimethoxysilane, 3-(vinylbenzylaminopropyl)trimethoxysilane, 3-(vinylphenylaminopropyl)triethoxysilane, 3-(vinylbenzylaminopropyl)triethoxysilane, divinyldimethoxysilane, divinyldiethoxysilane, divinyldi(2-methoxyethoxy)silane, vinyldiacetoxymethylsilane, vinyltriacetoxysilane, vinylbis(dimethylamino)methylsilane, vinylmethyldichlorosilane, vinyldimethylchlorosilane, vinyltrichlorosilane, vinylmethylphenylchlorosilane, allyltriethoxysilane, 3-allylaminopropyltrimethoxysilane, allyldiacetoxymethylsilane, allyltriacetoxysilane, allylbis(dimethylamino)methylsilane, allylmethyldichlorosilane, allyldimethylchlorosilane, allyltrichlorosilane, methallylphenyldichlorosilane, 2-(meth)acryroxyethyltrimethoxysilane, 2-(meth)acryroxyethyltriethoxysilane, 3-(meth)acryroxypropyltrimethoxysilane, 3-(meth)acryroxypropyltriethoxysilane, 3-(meth)acryroxypropylmethyldimethoxysilane, 3-(meth)acryroxypropylmethyldichlorosilane, 3-(meth)acryroxypropyltris(2-methoxyethoxy)silane], and an aziridinyl group-containing monomer [e.g., 2-(1-aziridinyl)ethyl (meth)acrylate, 2-(1-aziridinyl)propyl (meth)acrylate, 3-(1-aziridinyl)propyl (meth)acrylate]. The monomer containing a crosslinking functional group may be used singly or in combination.

The preferred monomer containing a crosslinking functional group has a hydrolyzed condensate group, in particular, an alkoxysilyl group (e.g., a C₁₋₄alkoxy silyl group such as methoxysilyl group, ethoxysiliyl group). An acrylic resin having the above hydrolyzed condensate group, or the like is preferably used as the thermosetting or crosslinking resin.

The thermosetting or crosslinking resin may comprise a copolymer obtainable from the monomer containing a crosslinking functional group and the other monomers (e.g., a monomer such as a monomer containing a cationic functional group, a hydrophilic monomer, a nonionic monomer).

As the monomer containing a cationic functional group, there may be mentioned, for example, a diC₁₋₄alkylamino-C₂₋₃alkyl(meth)acrylamide or a salt thereof [e.g., dimethylaminoethyl(meth)acrylamide, diethylaminoethyl(meth)acrylamide, dimethylaminopropyl(meth)acrylamide, diethylaminopropyl(meth)acrylamide], a diC₁₋₄alkylamino-C₂₋₃alkyl(meth)acrylate or a salt thereof [e.g., dimethylaminoethyl(meth)acrylate, diethylaminoethyl(meth)acrylate, dimethylaminopropyl(meth)acrylate, diethylaminopropyl (meth)acrylate], a diC₁₋₄alkylamino-C₂₋₃alkyl group-substituted aromatic vinyl compound or a salt thereof [e.g., 4-(2-dimethylaminoethyl)styrene, 4-(2-dimethylaminopropyl)styrene], a nitrogen-containing heterocyclic monomer or a salt thereof [e.g., vinylpyridine, vinylimidazole, vinylpyrrolidone]. As the salt, there may be mentioned a hydrohalogenic acid salt (e.g., hydrochloride, hydrobromide), a sulfate, an alkylsulfate (e.g., methylsulfate, ethylsulfate), an alkylsulfonate, an arylsulfonate, and a carboxylate (e.g., acetate). Incidentally, a quaternary ammonium salt group may be formed by reacting a tertiary amino group with an alkylating agent (e.g., epichlorohydrin, methyl chloride, benzyl chloride).

The cationic monomer (e.g., a monomer having a tertiary amino group or a salt group thereof, a monomer having or capable of forming a quaternary ammonium salt group) may be copolymerized with the monomer containing a crosslinking functional group to obtain a cationic polymer (a crosslinking polymer) having a crosslinking group, and fixability, water resistance and the like may be improved by using thus obtained polymer.

The hydrophilic monomer includes a copolymerizable monomer having a hydrophilic group such as a carboxyl group, an acid anhydride group, a hydroxyl group, an amide group, a sulfonic acid group, an ether group, a polyoxyalkylene group and the like.

As the carboxyl group-containing monomer, there may be mentioned an unsaturated carboxylic acid or an acid anhydride thereof such as (meth)acrylic acid, itaconic acid, maleic acid, maleic anhydride, fumaric acid, and crotonic acid, and a salt thereof (e.g., an alkali metal salt, an alkaline earth metal salt, an ammonium salt, an amine salt), a half-ester of an unsaturated polycarboxylic acid or a acid anhydride thereof with a linear or branched alcohol having about 1 to 20 carbon atom(s) (e.g., monomethyl malate, monoethyl malate, mono2-ethylhexyl malate).

As the hydroxyl group-containing monomer, there may be mentioned a hydroxyalkyl ester of an unsaturated fatty acid [e.g., a mono- or dihydroxyC₂₋₆alkyl ester of a carboxylic acid, for example, a hydroxyC₂₋₆alkyl (meth)acrylate such as 2-hydroxyethyl (meth)acrylate, 2-hydroxypropyl (meth)acrylate, 3-hydroxypropyl (meth)acrylate, and 4-hydroxybutyl (meth)acrylate, a mono- or dihydroxyC₂₋₆alkyl malate such as 2-hydroxyethylmethyl malate and di(2-hydroxypropyl)malate], an aliphatic, alicyclic or aromatic vinyl compound having a hydroxyl group (e.g., α-hydroxystyrene).

As the amide group-containing monomer, there may be mentioned a C₂₋₈carboxylic amide which may be substituted with a substituent such as a C₁₋₄alkyl group, a C₁₋₄alkoxy group, a C₁₋₄acyl group and the like [e.g., a (meth)acrylamide or a derivative thereof such as (meth)acrylamide, α-ethyl(meth)acrylamide, N-methyl(meth)acrylamide, N-butoxymethyl(meth)acrylamide, diacetone (meth)acrylamide].

As the sulfonic acid group-containing monomer, there may be mentioned such as an aliphatic, an alicyclic or an aromatic vinyl compound having a sulfonic acid group such as styrenesulfonic acid and vinylsulfonic acid, or a sodium salt thereof.

As the ether group-containing monomer, there may be mentioned a vinyl ether such as vinyl methyl ether, vinyl ethyl ether, and vinyl isobutyl ether.

As the polyoxyalkylene group-containing monomer, there may be mentioned diethylene glycol mono(meth)acrylate, triethylene glycol mono(meth)acrylate, and a polyethylene glycol mono(meth)acrylate.

The hydrophilic monomer may be used singly or in combination.

The preferred hydrophilic monomer includes a carboxyl group-containing monomer, in parlticular, a (meth)acrylic acid or its salt (e.g., a sodium salt, a potassium salt), a hydroxyl group-containing monomer [e.g., 2-hydroxylethyl (meth)acrylate, hydroxypropyl (meth)acrylate], a polyoxyalkylene unit-containing monomer [e.g., diethylene glycol mono(meth)acrylate, triethylene glycol mono(meth)acrylate, a polyethylene glycol mono(meth)acrylate].

The crosslinking functional group-containing monomer, the cationic functional group-containing monomer and the hydrophilic monomer may be used singly or in combination.

The monomer may be used in combination with a nonionic monomer in order to adjust the film-formability or film-formable (or coating) properties.

As the nonionic monomer, there may be mentioned, for example, an alkyl ester [e.g., a C₁₋₁₈alkyl ester of (meth)acrylic acid such as methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, hexyl (meth)acrylate, octyl (meth)acrylate, 2-ethylhexyl (meth)acrylate, lauryl (meth)acrylate, and stearyl (meth)acrylate], a cycloalkyl ester [e.g., cyclohexyl (meth)acrylate], an aryl ester [e.g., phenyl (meth)acrylate], an aralkyl ester [e.g., benzyl (meth)acrylate], an aromatic vinyl compound [e.g., styrene, vinyl toluene, α-methyl styrene], a vinyl ester [e.g., vinyl acetate, vinyl propionate, vinyl versatate], an allyl ester [e.g., allyl acetate], a halogen-containing monomer [e.g., vinylidene chloride, vinyl chloride], a vinyl cyanide [e.g., (meth)acrylonitrile], and an olefin [e.g., ethylene, propylene].

The nonionic monomer may be used singly or in combination.

As the nonionic monomer, a C₁₋₁₈alkyl ester of (meth)acrylic acid [in particular, a C₂₋₁₀alkyl ester of acrylic acid, a C₁₋₆alkyl ester of methacrylic acid], an aromatic vinyl compound [in particular, styrene], a vinyl ester [in particular, vinyl acetate] can be usually employed.

The thermosetting or crosslinking resin may comprise a copolymer of the crosslinking functional group-containing monomer (the monomer containing a crosslinking functional group) and if necessary, at least one monomer selected from the group consisting of the cationic functional group-containing monomer, the hydrophilic monomer and the nonionic monomer (in particular, the cationic functional group-containing monomer). Preferably, the thermosetting or crosslinking resin may be a copolymer of the monomer containing a crosslinking functional group, the cationic functional group-containing monomer, and further, at least one monomer selected from the group consisting of the hydrophilic monomer and the nonionic monomer (in particular, the hydrophilic monomer).

The preferred combinations of the monomers are as follows:
Crosslinkable (crosslinking) monomer : a silyl group-containing (meth)acrylate, for example, a (meth)acryloyloxy-C₂₋₃alkyltriC₁₋₂alkoxysilane
Cationic functional group-containing monomer : a diC₁₋₄alkylamino-C₂₋₃alkyl(meth)acrylate or a quaternary ammonium salt thereof
Hydrophilic monomer : an unsaturated carboxylic acid

A polymerization manner of a copolymer composed of the above monomers is not particularly limited, and the copolymer may be, for example, a random copolymer or the like.

In the total monomers, the amount of the monomer containing a crosslinking functional group is about 0.1 to 20% by weight, preferably about 0.1 to 10% by weight, and more preferably about 1 to 5% by weight, and the amount of the monomer containing a cationic functional group is about 1 to 50% by weight, preferably about 5 to 45% by weight, and the amount of the hydrophilic monomer is about 0 to 30% by weight (e.g., about 0.1 to 30% by weight), preferably about 0.1 to 20% by weight, and more preferably about 0.5 to 15% by weight, and the balance comprises the nonionic monomer.

In the preferred embodiment, as to the amount of the monomers, the amount of the cationic functional group-containing monomer is about 300 to 1,000 parts by weight and preferably about 500 to 800 parts by weight, and the amount of the hydrophilic monomer is about 100 to 500 parts by weight and preferably about 200 to 300 parts by weight relative to 100 parts by weight of the monomer containing a crosslinking functional group.

The form of the thermosetting or crosslinking resin may be a solution such as an organic solvent solution and an aqueous solution, and is usually an emulsion (in particular, an aqueous emulsion). An emulsion containing a crosslinking polymer can be obtained by a conventional method, for example, a method which comprises emulsion-polymerizing the monomers in the emulsion-polymerization system containing a nonionic surfactant and/or a cationic surfactant, or a method which comprises polymerizing the monomers followed by forming a tertiary amine salt or a quaternary ammonium salt to obtain an aqueous emulsion.

Incidentally, the thermosetting or crosslinking resin, the urethane-series resin and the hydrophilic polymer may be employed in combination, for example, by previously mixing them. Moreover, the thermosetting or crosslinking resin and the urethane-series resin may be used in a form of a composite or a complex obtainable by a process which comprises emulsion polymerizing a monomer composed of an acrylic monomer (in particular, a cationic monomer) in the presence of a urethane-series resin emulsion. The thermosetting or crosslinking resin may be used singly or in combination.

Further, it is particularly preferred that the hydrophilic polymer and the urethane-series resin are employed in combination. The ratio (weight ratio) of the hydrophilic polymer relative to the urethane-series resin is about 90/10 to 10/90, preferably about 70/30 to 30/70, and more preferably about 60/40 to 40/60.

### (Dye fixing agent)

Further, the transfer layer may contain a cationic compound (a dye fixing agent having a low molecular weight) or a polymeric dye fixing agent as a dye fixing agent in order to improve a fixability of a coloring agent (dye). In particular, in the film-formable (film-forming) resin component, when a cationic monomer is not introduced to the resin, it is preferred that the dye fixing agent is employed. The dye fixing agent may be used singly in combination. Among these dye fixing agents, a cationic compound, in particular, a quaternary ammonium salt is preferred.

### (1) Cationic compound

The cationic compound includes an aliphatic amine salt, a quaternary ammonium salt (e.g., an aliphatic quaternary ammonium salt, an aromatic quaternary ammonium salt, a heterocyclic quaternary ammonium salt), and the like. The cationic compound may be used singly or in combination. Among them, the preferred cationic compound includes an aliphatic quaternary ammonium salt (e.g., a tetraC₁₋₆alkylammonium halide such as tetramethylammonium chloride, tetraethylammonium chloride, tetramethylammonium bromide and tetraethylammonium bromide, a triC₁₋₆alkylC₈₋₂₀alkylammonium halide such as trimethyllaurylammonium chloride and trimethyllaurylammonium bromide, a diC₁₋₆alkyldiC₈₋₂₀alkylammonium halide such as dimethyldilaurylammonium chloride and dimethyldilaurylammonium bromide), especially a tetraC₁₋₄alkylammonium halide (e.g., a tetraC₁₋₂alkylammonium halide), a triC₁₋₄alkylC₁₀₋₁₆alkylammonium halide (e.g., a triC₁₋₂alkylC₁₀₋₁₄alkylammonium halide), a diC₁₋₄alkyldiC₁₀₋₁₆alkylammonium halide (e.g., a diC₁₋₂alkyldiC₁₀₋₁₄alkylammonium halide).

### (2) Polymeric dye fixing agent

The polymeric dye fixing agent usually has a cationic group (in particular, a strong cationic group such as a guanidyl group and a quaternary ammonium salt thereof) in its molecule.

As the polymeric dye fixing agent, there may be mentioned, for example, a dicyane-series compound (e.g., a dicyanediamide-formaldehyde polycondensate), a polyamine-series compound [e.g., an aliphatic polyamine such as diethylenetriamine, an aromatic polyamine such as phenylenediamine, a condensate of a dicyandiamide and a (poly)C₂₋₄alkylenepolyamine (e.g., a dicyanediamide-diethylenetriamine polycondensate)], a polycationic compound and the like. As the polycationic compound, there may be mentioned, for example, an epichlorohydrine-diC₁₋₄alkylamine addition polymer (e.g., an addition polymer of an epichlorohydrine-dimethylamine), a polymer of an allylamine or a salt thereof (e.g., a polymer of an allylamine or a salt thereof, a polymer of a polyallylamine or a hydrochloride thereof), a polymer of a diallylC₁₋₄alkylamine or a salt thereof (e.g., a polymer of a diallylmethylamine or a salt thereof), a polymer of a diallyldiC₁₋₄alkylammonium salt (e.g., a polymer of a diallyldimethylammonium chloride), a copolymer of a diallylamine or a salt thereof and a sulfur dioxide (e.g., diallylamine salt-sulfur dioxide copolymer), a diallyldiC₁₋₄alkylammonium salt-sulfur dioxide copolymer (e.g., diallyldimethylammonium salt-sulfur dioxide copolymer), a copolymer of a diallyldiC₁₋₄alkylammonium salt and a diallylamine or a salt thereof or a derivative thereof (e.g., a copolymer of a diallyldimethylammonium salt-diallylamine hydrochloride derivative), a diallyldiC₁₋₄alkylammonium salt polymer (e.g., diallyldimethylammonium salt polymer), a,polymer comprising a quaternary salt of dialkylaminoethyl(meth)acrylate [e.g., a diC₁₋₄alkylaminoethyl(meth)acrylate quaternary salt polymer], a diallyldiC₁₋₄alkylammonium salt-acrylamide copolymer (e.g., a diallyldimethylammonium salt-acrylamide copolymer), an amine-carboxylic acid copolymer, and the like. The polymeric dye fixing agent may be used singly or in combination.

The ratio of the dye fixing agent is, on solid basis, about 1 to 200 parts by weight (e.g., about 1 to 50 parts by weight), preferably about 5 to 150 parts by weight (e.g., about 5 to 40 parts by weight), more preferably about 10 to 100 parts by weight (e.g., about 10 to 30 parts by weight), and usually about 10 to 60 parts by weight relative to 100 parts by weight of the film-formable resin component.

### (Additives)

If necessary, the transfer layer may contain a variety of additives, for example, the other dye fixing agents, stabilizers (e.g., antioxidants, ultraviolet ray absorbers, thermal stabilizers), antistatic agents, flame retardants, lubricants, antiblocking agents, fillers, coloring agents, antifoaming agents, coatability improvable agents, and thickeners. The hot-melt adhesive particle may contain adhesion imparting agents (e.g., rosin or a derivative thereof, hydrocarbon-series resins), waxes and the like beside the above additives.

The coating amount of the transfer layer is about 1 to 300 g/m², preferably about 10 to 200 g/m² and more preferably about 50 to 150 g/m². The thickness of the transfer layer is about 5 to 200 µm, preferably about 10 to 150 µm, and usually about 5 to 100 µm. Incidentally, the thickness of the transfer layer means a minimum thickness of the coating layer formed with the use of a coating agent comprising a hot-melt adhesive particle.

Moreover, if necessary, a porous layer, an antiblocking layer, a lubricating layer, an antistatic layer and others may be formed on the transfer layer.

### [Protecting layer]

In the transfer sheet of the present invention, a protecting layer separable from the support may be interposed between the support and the transfer layer. The protecting layer may be interposed between the support and the transfer layer, and has a role of protecting the transfer layer after transferring the transfer layer onto an object. In particular, washing resistance is dramatically improved by disposing the protecting layer.

As the protecting layer, a variety of thermoplastic resins and thermosetting resins, in particular, a polymer having film-formable properties (especially, a polymer having non-adhesiveness, flexibility and suppleness) can be employed as far as the protecting layer is capable of separating from the support and protecting the transfer layer, and the quality of a transfer image is not extremely deteriorated. As the thermoplastic resin, there may be mentioned a variety of resins such as a polyamide-series resin, a polyester-series resin, a styrenic resin, a polyolefinic resin, a polycarbonate-series resin, a polyvinyl acetate-series resin, a acrylic resin, a vinyl chloride-series resin, and a thermoplastic urethane-series resin. As the thermosetting resin, there may be mentioned a urethane-series resin, an epoxy-series resin, a phenolic resin, a melamine-series resin, a urea resin, and a silicone-series resin. Among these resins, a urethane-series resin (e.g., the above thermoplastic urethane-series resin) and/or a cationic resin, in particular, a cationic thermoplastic urethane-series resin is preferred since such a resin has high wettability or compatibility with a support and protects the transfer layer efficiently.

As the urethane-series resin, the above exemplified resins can be employed, and as the thermoplastic urethane-series resin, for example, a polyester-based urethane-series resin obtained with the use of at least a polyester diol as a diol component, especially, a polyester-based urethane-series resin obtained with the use of a diol component containing not less than 50% by weight (e.g., not less than 75% by weight) of an aliphatic polyester diol is preferred. Moreover, if necessary, a diamine component may be used as a chain-extending agent to make a urethane-series resin a thermoplastic elastomer. As the thermoplastic urethane-series elastomer, for example, there may be mentioned an elastomer containing an aliphatic polyether or a polyester as a soft segment and a polyurethane unit of a short-chain glycol as a hard segment. As the cationic thermoplastic urethane-series resin, there may be mentioned a urethane-series polymer into which the above-exemplified tertiary amino group or the quaternary ammonium salt is incorporated.

The coating amount of the protecting layer is about 0.1 to 20 g/m², preferably about 1 to 15 g/m² and more preferably about 1 to 10 g/m². The thickness of the protecting layer is about 0.1 to 10 µm, and preferably about 1 to 5 µm.

### [Production Process]

The transfer sheet of the present invention can be produced by forming the transfer layer on at least one side of the support. The transfer layer can be formed by coating a release surface of the support with a coating agent comprising a hot-melt adhesive particle, a phosphorescent pigment, a film-formable resin component, and if necessary other components (e.g., a dye fixing agent). The film-formable resin component can be usually employed in the form of an aqueous solution or an emulsion. The coating agent for a transfer layer can be, therefore, prepared by mixing an aqueous solution or emulsion containing a film-formable resin component with a hot-melt adhesive particle and a phosphorescent pigment, if necessary, further with the other components. A solvent for an aqueous solution or an aqueous emulsion may be water alone, or may optionally contain a hydrophilic organic solvent such as an alcohol.

When a protecting layer is formed, the protecting layer can be formed by coating a release surface of the support with a coating agent for the protecting layer comprising a urethane-series resin and the like, if necessary drying to form the protecting layer, and the transfer layer can be formed by coating the protecting layer with the coating agent for the transfer layer.

The coating agent can be applied (or coated) on at least one side of the support by a conventional method such as roller coating, air knife coating, blade coating, rod coating, bar coating, comma coating or graver coating. The heating or drying temperature of the coating layer may be suitably selected depending on the melting point of the hot-melt adhesive particle. For example; in the case using the hot-melt adhesive particle (A) and the hot-melt adhesive particle (B), the heating or drying temperature of the coating layer may selected from the range between both melting points. That is, the transfer layer can be formed by drying the coating layer at a temperature of about 50 to 150°C, preferably about 60 to 120°C, and more preferably about 70 to 100°C (particularly about 70 to 90°C).

The transfer layer formed by the above method (process) is suitable for forming an image by an ink jet printing (recording) system which comprises ejecting droplets of ink (in particular, aqueous ink) to record. A record image can be smoothly transferred or conveyed onto an object by applying an appropriate pressure (e.g., about 500 to 50,000 Pa) at an appropriate temperature (e.g., about 140 to 250°C, preferably about 140 to 200°C) for an appropriate period (e.g., about 5 seconds to 1 minute) with contacting the transfer layer with the object, and then peeling (or separating) the transfer layer (or the protecting layer) from the support. If necessary, a transfer material containing the transfer image may be heated for crosslinking.

As the object, there may be utilized two-dimensional or three-dimensional structures made of various materials such as fibers, papers, woods, plastics, ceramics and metals. Fabrics (e.g., T-shirts), plastic films or sheets, papers, and others may be usually employed as the object. In particular, since the image transferred by the transfer sheet of the present invention effectively exerts a luminescence action of the phosphorescent pigment and has high quality visibility in a dark place, the sheet is suitable for application desiring a decorative effect in a dark place, application such as a traffic-related equipment (fixture) used for calling an attention of vehicle or people or an equipment used in a factory, a construction field or others, and other application.

The transfer sheet of the present invention realizes brightness of a clear (or distinct) or bright (or vivid) image in a dark place even after transferring. Moreover, even when the transfer sheet is thermal-transferred onto an object (e.g., clothes), the coating layer is excellent in stability, in particular water-resistance. Further, the transfer sheet is excellent in thermal transferability and adhesiveness, and imparts high quality texture to an object (e.g., clothes) onto which a transfer layer of the sheet is thermal-transferred.

### EXAMPLES

The following examples are intended to describe this invention in further detail and should by no means be interpreted as defining the scope of the invention. Incidentally, unless otherwise indicated, "part(s)" indicates the proportion by weight. Moreover, the species or characteristics of each component comprised in the transfer layer of the transfer sheets obtained in Examples and methods for evaluating various capabilities or properties of the transfer sheets are shown as follows. Incidentally, the transfer layer was formed by heating at 80°C.

### (Characteristics of each component comprised in transfer layer and protecting layer)

Nylon 12 particle A: manufactured by Daicel Huels, Co. Ltd., Bestamelt 430-P06, melting point of 110°C, mean particle size of 60 µm

Nylon 12 particle B: manufactured by Daicel Huels, Co. Ltd., Bestamelt 640-P1, melting point of 76°C, mean particle size of 100 µm Phosphorescent pigment: manufactured by Nemoto & Co., Ltd., LumiNova G-300M, mean particle size of 20 µm, SrAl₂O₄:Eu,Dy

Urethane-series resin emulsion: manufactured by Shinnakamura Chemical Corporation, SP resin ME-307

Polyethylene glycol: manufactured by Sanyo Chemical Industries, Ltd., PEG4000S

Dye fixing agent: manufactured by Senka, Co. Ltd., PAPIOGEN P109, a quaternary ammonium salt-containing compound

Cationic urethane-series resin emulsion: manufactured by Dai-ichi Kogyo Seiyaku Co., Ltd., F-8559D

### (Method for forming image)

With the use of an ink jet printer (manufactured by Seiko Epson, Corporation, PM-770C), on the transfer sheets obtained in Examples was individually printed a predetermined image with cyane, yellow, magenta, black, lightcyane, lightmagenta and darkyellow inks to form a record image.

### (Method for transferring)

After printing the transfer sheet, the transfer sheet was placed on a card white T-shirts (manufactured by Arai Seitaro Shoten K.K., L-size) with the printed side attached to the T-shirts. The transfer sheet was ironed from the upper side thereof with loading of 98N (10kgf) with the use of an iron (manufactured by Toshiba Corporation, TAD23). The ironed time was totally 4 minutes while changing a part to be ironed every 5 seconds. Furthermore, the ironed transfer sheet and T-shirts were cooled down enough, and then the release paper was separated from them.

### (Method of washing)

After transferring, the washing operation was carried out by adding 15 g of a neutral detergent to 15 L of warmed water of 30°C, washing for 15 minutes, rinsing for 11 minutes and drying for 5 minutes. This cycle was repeated 5 times, and then the wash was allowed to dry spontaneously.

### (Washing resistance)

After washing, the image-transferred area (an area onto which the image was transferred) was visually observed, and the washing resistance was evaluated according to the following criteria.
"A": the image-transferred area hardly changes
"B": the image-transferred area discolors
"C": the image-transferred area is separated from the T-shirts

### (Brightness of image after transferring)

Solid parts of cyane, magenta, yellow and black inks were printed on the transfer sheet, and transferred onto the object. After transferring, the reflection density was measured in each color by a reflection-mode (reflection-type) Macbeth densitomater, and evaluated on the basis of the following criteria.
"A": not less than 1.2
"B": not less than 1 and below 1.2
"C": below 1

### (Luminescence (Phosphorescence))

The transfer image was irradiated by a fluorescent light for 3 hours, and then the luminescence time in a light-shielded room was visually observed, and evaluated on the basis of the following criteria.
"A": not shorter than 2 hours
"B": not shorter than 1 hour and below 2 hour
"C": below 1 hour, or no luminescence

### (Paper feeding)

Ten (10) pieces of transfer sheet were printed successively or continuously with the use of the ink jet printer (manufactured by Seiko Epson, Corporation, PM-770C), and the degree of defect in paper feeding (e.g., the sheet was not supplied or fed, or the sheet clogged or jammed) was evaluated according to the following criteria.
"A": no defect
"B": two or less pieces of sheet are not supplied
"C": the sheet jams, or three or more pieces of sheet are not fed

### Examples 1 to 11

An aqueous coating solution (or coating agent) was prepared by mixing the components in the proportion shown in Table 1 (on solid basis). The aqueous coating solution was coated on a paper for coating (manufactured by Lintec Corporation, BK6RB (S5)) at coating amount of 116 g/m² and dried at 80°C to obtain a transfer sheet composed of a transfer layer having the basis weight of 37 g/ m². Incidentally, the basis weight of the protecting layer was 7 g/m². The evaluation results of the obtained transfer sheets are shown in Table 1.

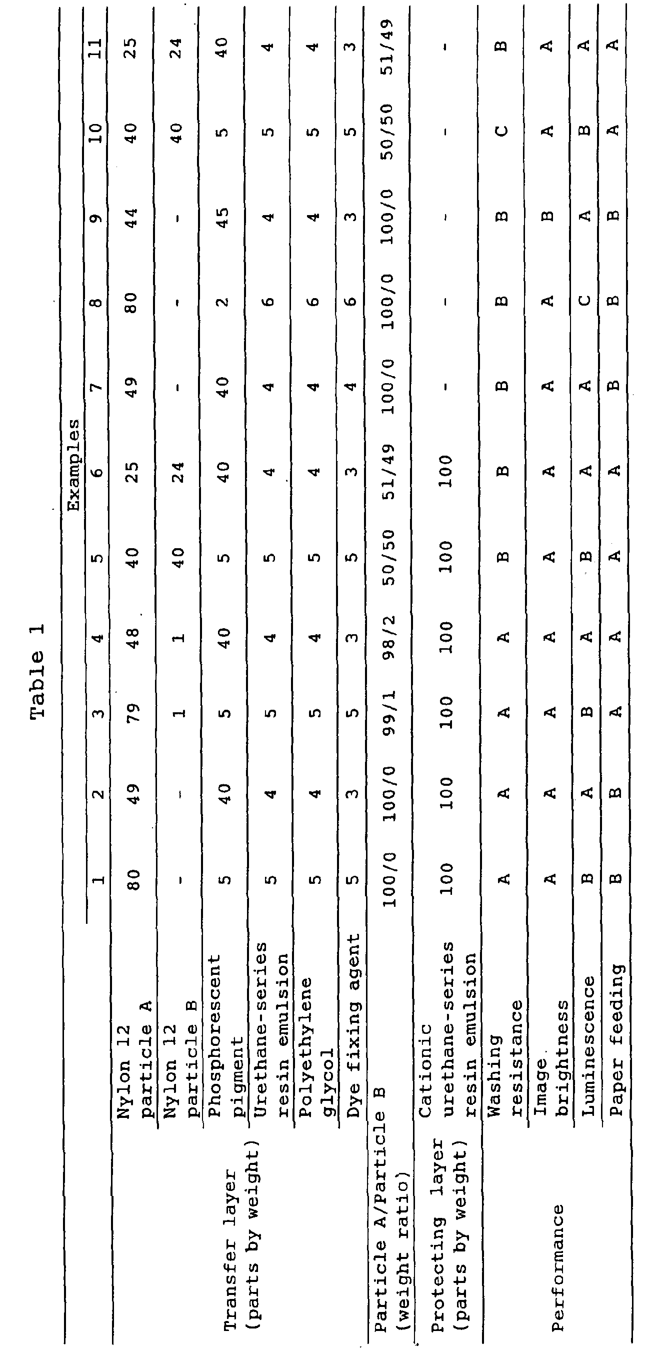

As apparent from Table 1, the transfer sheets of Examples 1 to 11 are excellent in each performance. In particular, the transfer sheets of Examples 3 to 6, which comprises a protecting layer and a transfer layer containing two kinds of nylon fine particles, are excellent in a balance of each performance.

## Claims

1. A transfer sheet comprising a support and a transfer layer separable from the support, wherein the transfer layer comprises a hot-melt adhesive particle and a phosphorescent pigment.

2. A transfer sheet according to claim 1, wherein the transfer layer is a porous layer.

3. A transfer sheet according to claim 1, wherein the mean particle size of the hot-melt adhesive particle is 30 to 150 µm, and the mean particle size of the phosphorescent pigment is 5 to 40 µm.

4. A transfer sheet according to claim 1, wherein the ratio of the mean particle size of the hot-melt adhesive particle relative to that of the phosphorescent pigment is 1/1 to 10/1.

5. A transfer sheet according to claim 1, wherein the transfer layer is a layer formed at a heating temperature, and the hot-melt adhesive particle comprises a particle (A) having a melting point of higher than the heating temperature and a particle (B) having a melting point of not higher than the heating temperature.

6. A transfer sheet according to claim 1, wherein the hot-melt adhesive particle comprises a polyamide-series resin particle.

7. A transfer sheet according to claim 1, wherein the phosphorescent pigment comprises a base crystal and an activator.

8. A transfer sheet according to claim 1, wherein the phosphorescent pigment comprises a base crystal represented by the following composition formula (1):
MAl₂O₄ (1)
wherein M represents at least one member selected from the group consisting of metal atoms of the Group 2A of the Periodic Table of Elements.

9. A transfer sheet according to claim 1, wherein the transfer layer further comprises a film-formable resin component.

10. A transfer sheet according to claim 9, wherein the film-formable resin component comprises at least one member selected from the group consisting of a hydrophilic polymer, a urethane-series resin, and a thermosetting or a crosslinkable (crosslinking) resin.

11. A transfer sheet according to claim 1, which further comprises a dye fixing agent.

12. A transfer sheet according to claim 1, a protecting layer separable from the support is interposed between the support and the transfer layer.

13. A transfer sheet according to claim 9, which comprises 150 to 3000 parts by weight of the hot-melt adhesive particle and 10 to 1000 parts by weight of the phosphorescent pigment relative to 100 parts by weight of the film-formable resin component.

14. A transfer sheet according to claim 1, wherein the weight ratio of the hot-melt adhesive particle relative to the phosphorescent pigment is 99/1 to 30/70.

15. A transfer sheet comprising a support and a transfer layer separable from the support,
wherein the transfer layer comprises
a polyamide-series hot-melt adhesive particle having a mean particle size of 40 to 80 µm,
a strontium-containing phosphorescent pigment having a mean particle size of 7 to 35 µm,
a polyoxyalkylene glycol-series resin,
a polyester-based urethane-series resin, and
a cationic compound;
the ratio of the mean particle size of the hot-melt adhesive particle relative to that of the phosphorescent pigment is 2/1 to 8/1; and
the transfer layer comprises 200 to 1000 parts by weight of the hot-melt adhesive particle, 20 to 500 parts by weight of the phosphorescent pigment, and 5 to 150 parts by weight of the cationic compound relative to 100 parts by weight of the total amount of the polyoxyalkylene glycol-series resin and the polyester-based urethane-series resin.

16. A method for producing a transfer sheet, which comprises forming directly or indirectly a transfer layer comprising a hot-melt adhesive particle and a phosphorescent pigment on a release surface of a support to give the transfer sheet.

17. A method for producing a transfer sheet according to claim 16, which comprises forming a protecting layer on a release surface of a support followed by forming a transfer layer comprising a hot-melt adhesive particle and a phosphorescent pigment on the protecting layer to give the transfer sheet.

18. A method for transferring or forming a record image onto an object, which comprises recording an image onto a transfer layer of a transfer sheet recited in claim 1 by means of an ink jet recording system, heating the transfer layer with contacting with the object, and separating the transfer layer from a support for transferring or forming the record image onto the object.

19. A fabric or clothes, on which a record image is formed by a method recited in claim 18.

20. Use of a transfer sheet recited in claim 1 for transferring or forming a record image onto an object.
